# EUROPEAN PATENT SPECIFICATION

(11) **EP 1 617 083 B1**
(45) Date of publication and mention of the grant of the patent: **18.03.2009**
(21) Application number: 05290017.2
(22) Date of filing: 05.01.2005
(51) Int. Cl.: F04D 13/06

(54) **Electric pump**
Elektrisch angetriebene Pumpe
Pompe électrique

(30) Priority: 13.07.2004 KR 2004054303
(43) Date of publication of application: 18.01.2006
(73) Proprietor: LG ELECTRONICS INC., Seoul (KR)
(72) Inventor: Lee, Yo-Han, Seoul (KR); Choi, Jay-Ho Gaepowoosung 4-cha Apt. 2-701, 35/1, Seoul (KR); Lim, Jun-Young, Incheon (KR)
(74) Representative: Loisel, Bertrand

(56) References cited:
- EP-A- 1 045 149
- DE-A1- 3 823 678
- DE-C1- 19 525 704
- US-A- 5 248 245
- US-B1- 6 293 769

## Description

### BACKGROUND OF THE INVENTION

### 1. Field of the Invention

The present invention relates to a wet and dry pump, and particularly, to a wet and dry pump capable of making wet air or liquid pass through a space between a stator and a rotor by processing a motor to be damp-proof.

### 2. Description of the Conventional Art

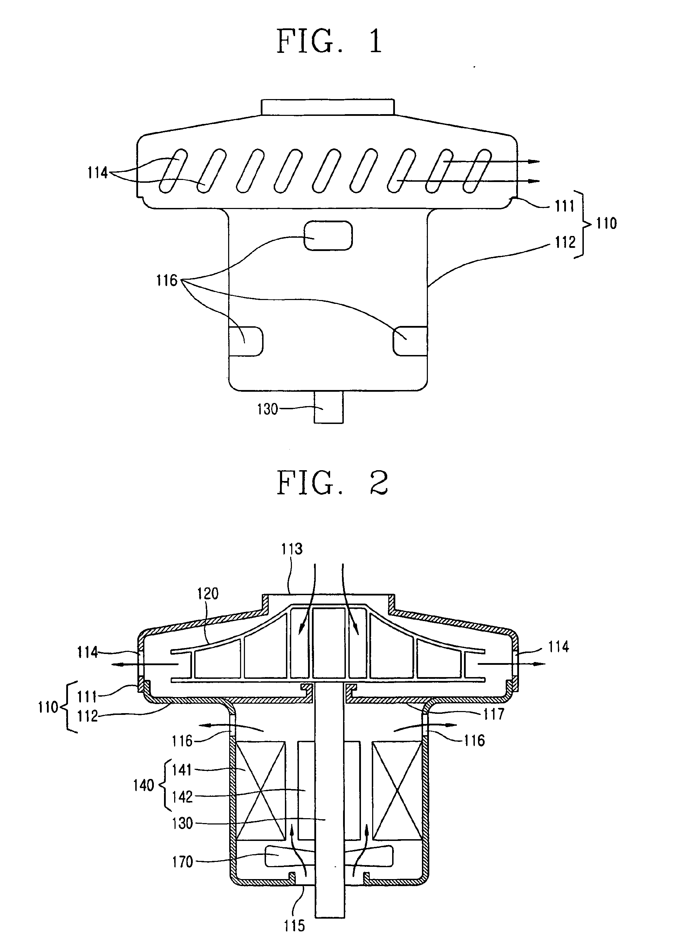

As shown in FIGS. 1 and 2, a conventional wet and dry pump includes: a housing 110 provided with a cylindrical impeller cover 111 and a cylindrical motor cover 112; an impeller 120 rotatably installed in the impeller cover 112; a motor 140 installed in the motor cover 112 and connected to the impeller 120 and a rotating shaft 130, for providing a driving force to rotate the impeller 120; and a cooling fan 170 connected to the rotating shaft 130 and rotated by a rotation of the rotating shaft 130 and thereby sucking a cooling air into the motor cover 102 to discharge it.

An inlet 113 for sucking fluid by an operation of the impeller 120 is formed at a central upper portion of the impeller cover 111, and a plurality of outlets 114 for discharging the fluid flowed in the impeller cover 111 is formed at a circumference of the impeller cover 111.

A suction opening 115 for sucking cooling air by an operation of the cooling fan 170 is formed at a central lower portion of the motor cover 112, and a plurality of discharge openings 116 for discharging the air having performed a cooling operation to the outside are formed at a circumference of the motor cover 112.

The motor 140 includes: a stator 141 of a ring shape fixed at an inner circumferential surface of the motor cover 112; and a cylindrical rotor 142 fixed at an outer circumference of the rotating shaft 130, maintaining a certain gap with an inner circumferential surface of the stator 141. According to this, the air sucked by the cooling fan 170 discharges to the outside a heat generated from the motor 140 when the air passes through the gap between the stator 141 and the rotor 142.

A shielding wall 117 is installed between the impeller cover 111 and the motor cover 112. As a result, the fluid sucked by the impeller 120 can not be flowed in the motor cover 112 and the cooling air sucked by the cooling fan 170 can not be flowed in the impeller cover 111 as well.

According to the aforementioned construction, when the motor 140 is operated, the impeller 120 is rotated by the rotation of the rotating shaft 130. As a result, fluid is flowed in the impeller cover 111 through the inlet 113 of the impeller cover 111 and discharged to the outside through the outlet 114.

Additionally, once the cooling fan 170 is rotated by the rotation of the rotating shaft 130, the external air is sucked in the motor cover 112 through the suction opening 115 and cools the motor 140 while passing through the gap between the stator 141 and the rotor 142, thereafter being discharged to the outside through the discharge opening 116.

In the aforementioned conventional wet and dry pump, since the shielding wall 117 for shielding a space between an inner space of the impeller cover 111 and an inner space of the motor cover 112 is installed therein, the fluid flowed in the impeller cover 111 is prevented from being flowed toward the motor 140 and thereby the conventional wet and dry pump can pump wet air or liquid.

However, because the conventional wet and dry pump should have the cooling fan 170 for cooling the motor 140, power loss of approximately 60-70W is occurred, and noise of approximately 2-3dB is disadvantageously increased thereby.

Document EP 1 045 149 discloses a coolant pump comprising a multicomponent housing having an inlet and an outlet of fluid and an impeller rotatably set in the housing. A motor includes a rotating shaft connected to the impeller. The motor has a station fixed to an inner circumferential surface of the housing, the stator having a damp-proof-processed winding coil therein. The motor further comprises a rotor fixed to an outer circumference of the rotating shaft while maintaining a certain gap with an inner circumference of the station. The housing includes a motor chamber and impeller chamber. A connecting channel is provided between the impeller chamber and the motor chamber.

### SUMMARY OF THE INVENTION

Therefore, an object of the present invention is to provide a wet and dry pump capable of improving a cooling efficiency of a motor by processing it to be damp-proof and thus by making wet air or liquid pass through a space between a stator and a rotor, and capable of improving characteristics of power consumption and noise by removing a separate cooling fan for cooling the motor.

To achieve these and other advantages and in accordance with the purpose of the present invention, as embodied and broadly described herein, there is provided a wet and dry pump, comprising: a housing having an inlet and an outlet of fluid; an impeller rotatably disposed in the housing; and a motor including a rotating shaft connected to the impeller, a stator fixed to an inner circumferential surface of the housing and having a damp-proof-processed winding coil therein, and a rotor fixed to an outer circumference of the rotating shaft with maintaining a certain gap with an inner circumference of the stator. The pump further comprises a guide member installed in the housing and adapted to guide fluid sucked by the impeller toward the motor.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a front view showing a conventional wet and dry pump;
FIG. 2 is a longitudinal sectional view showing the wet and dry pump shown in FIG. 1;
FIG. 3 is a front view showing a wet and dry pump according to the present invention;
FIG. 4 is a longitudinal sectional view showing the wet and dry pump shown in FIG. 3;
FIG. 5 is a perspective view showing a partially cut stator in FIG. 3;
FIG. 6 is a graph showing respective power consumption of the wet and dry pump according to the present invention and that of the conventional wet and dry pump, respectively in comparison therewith; and
FIG. 7 is a graph showing respective operation noise of the wet and dry pump according to the present invention and that of the conventional wet and dry pump in comparison therewith.

### DETAILED DESCRIPTION OF THE PREFERRED EMBODIMENTS

Reference will now be made in detail to the preferred embodiments of the present invention, examples of which are illustrated in the accompanying drawings.

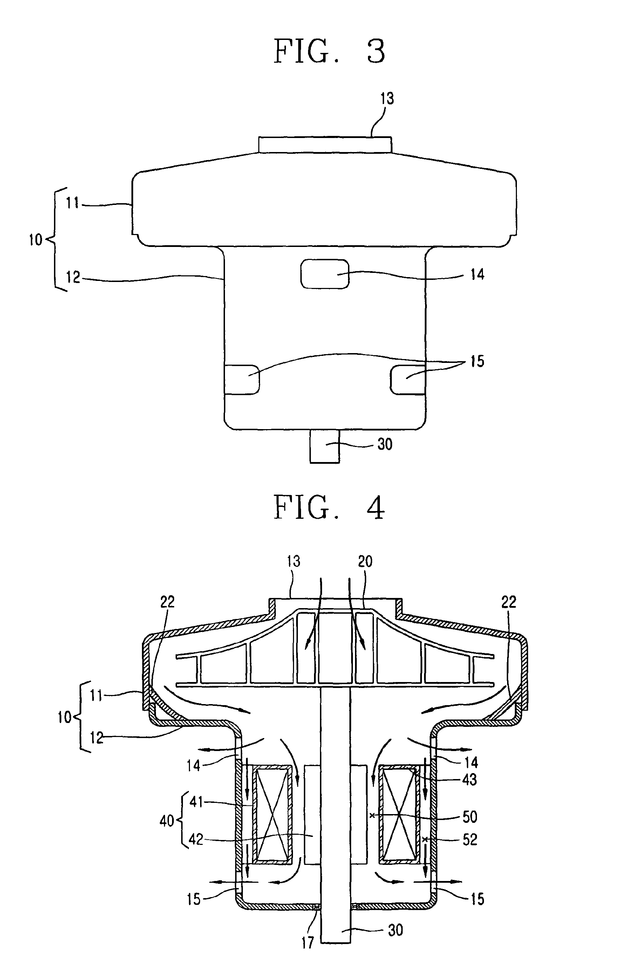

Referring to FIGS. 3 and 4, a wet and dry pump according to the present invention is comprised of: a housing 10 provided with a cylindrical impeller cover 11 having an inlet 13 at a central upper portion thereof and a cylindrical motor cover 12 having a plurality of outlets 14 and 15 along an outer circumference thereof; an impeller 10 rotatably installed in the impeller cover 11; and a motor 40 installed in the motor cover 12 and connected to the impeller 20 and a rotating shaft 30, for providing a driving force to rotate the impeller 20.

The motor 40 includes: a stator 41 of a ring shape fixed to an inner circumferential surface of the motor cover 12; and a rotor 42 fixed to an outer circumference of the rotating shaft 30, maintaining a certain gap 50 with an inner circumference of the stator 41.

A brushless motor, particularly, a switched reluctance (SRM) motor is preferably applied as the motor 40, and according to characteristics of the brushless motor, the rotor 42 has a characteristic of damp-proofing.

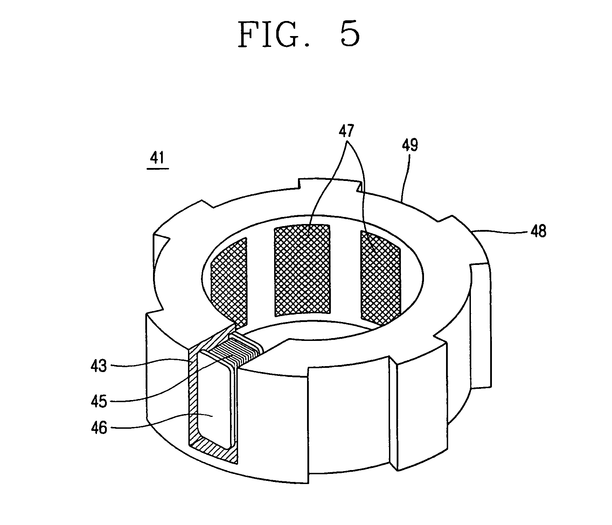

As can be seen from FIG. 5, the stator 41 is comprised of: a plurality of bobbins 46 arranged as a ring shape and the each bobbin having a coil 45 which is wound therein, wherein entire outer portion of the each bobbin is molded (43) with a material such as a synthetic resin; and a plurality of conductors 47 connected to the plurality of bobbins 46, respectively, and exposed to the outside of the molding portion 43 at a certain interval along an inner circumference of the stator 41. As a result, even although wet air or liquid passes through a space between the stator 41 and the rotor 42, the coils 45 in the molding portion 43 are shielded from the wet air or the liquid.

The molding portion 43 has a plurality of protruded portions 48 and recessed portions 49 along an outer circumference thereof in order to form a cooling passage 51 through which fluid sucked by the impeller 10 passes for cooling the motor 40. Namely, the protruded portion 48 of the molding portion 43 is fixed to an inner circumferential surface of the motor cover 12 via welding or other engaging means, thus the cooling passage 51 is formed between the recessed portion 49 of the molding portion 43 and the inner circumferential surface of the motor cover 12.

The plurality of outlets 14 and 15 formed at the motor cover 12 are comprised of: a first outlet 14 formed at an upper side of the stator 41, for first discharging the fluid flowed in from the impeller cover 11; and a second outlet 15 formed at a lower side of the stator 41, for passing fluid, which is not discharged to the outside through the first outlet 14, through the space between the stator 41 and the rotor 42 and thereafter for discharging to the outside.

The rotating shaft 30 can be protruded to the outside of the motor cover 12. In this case, a bearing 17 is preferably installed between the rotating shaft 30 and the motor cover 12.

Preferably, a guide member 22 for guiding the fluid flowed in by the impeller 20 toward the motor cover 12 is installed between the impeller cover 11 and the motor cover 12. In the embodiment of the present invention, the guide member 22 has a flat type of ring shape forming a curved surface toward the impeller 20.

Hereinafter, an operation of the wet and dry pump according to the present invention will be described.

First, once the rotor 42 is rotated by an electromagnetic interaction between the stator 41 and the rotor 42, the impeller 20 connected to the rotor 42 and the rotating shaft 30 is rotated and thereby external fluid is flowed in through the inlet 13 of the impeller cover 11.

The fluid flowed in the impeller cover 11 is guided to the guide member 22 to be flowed in the motor cover 12. A part of the fluid flowed in the motor cover 12 is discharged to the outside through the first outlet 14, and non-discharged fluid passes through the cooling passage 50 between the stator 41 and the rotor 42 as well as the cooling passage 51 between the inner circumference of the motor cover 12 and the outer circumference of the stator 41 in order to cool the motor 40. Furthermore, the fluid having performed the cooling operation for the motor 40 is discharged to the outside through the second outlet 15.

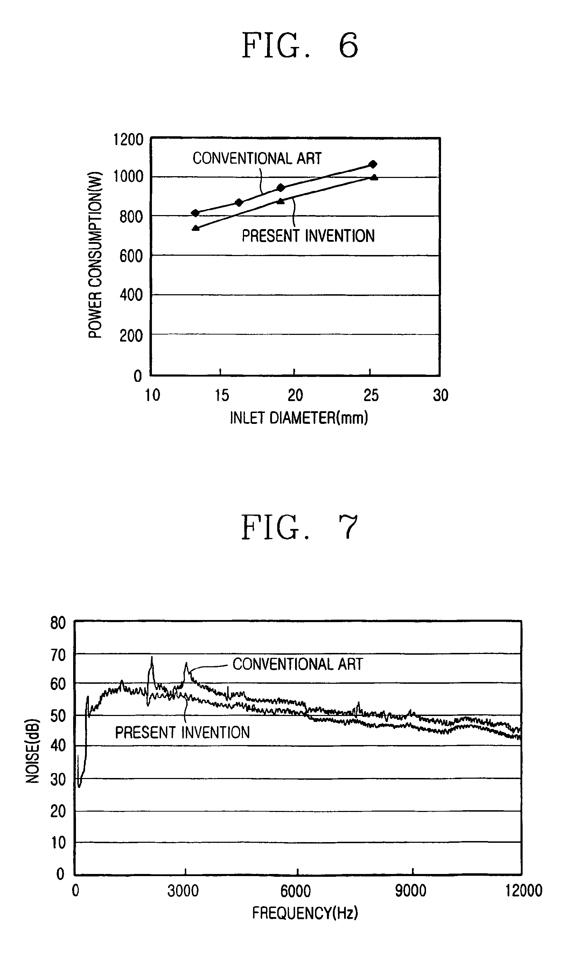

Hereinafter, effect of the wet and dry pump in accordance with the present invention will be explained with reference to FIGS. 6 and 7.

FIG. 6 is a graph showing a variation of power consumption based on a diameter of the inlet 13, namely, variation of suction capacity of the pump according to the present invention with the conventional pump, respectively. As shown in FIG. 6, it can be noticed that the pump according to the present invention consumes power less than the conventional pump does because the cooling fan for cooling the motor has been removed.

FIG. 7 is a graph showing noise measured in the conventional pump and the pump according to the present invention, respectively. As shown in FIG. 7, it can be noticed that the pump according to the present invention is improved characteristics of noise in comparison with the conventional pump because the cooling fan for cooling the motor has been removed.

As stated above, the wet and dry pump according to the present invention can advantageously improve a cooling efficiency of the motor by processing it to be damp-proof and then making wet air or liquid pass through a passage between the stator and the rotor.

Furthermore, the wet and dry pump according to the present invention can efficiently improve characteristics of power consumption and noise by removing the cooling fan for cooling the motor.

## Claims

1. A wet and dry pump, comprising:
a housing (10) having an inlet (13) and an outlet (14, 15) of fluid;
an impeller (20) rotatably set in the housing; and
a motor (40) including a rotating shaft (30) connected to the impeller, a stator (41) fixed to an inner circumferential surface of the housing and having a damp-proof-processed winding coil (45) therein, and a rotor (42) fixed to an outer circumference of the rotating shaft with maintaining a certain gap (50) with an inner circumference of the stator, **characterized in that** it further comprises a guide member (22), installed in the housing (10) adapted to guide fluid sucked by said impeller toward said motor, wherein the outlets are respectively formed at upper and lower sides of the stator.

2. The pump of claim 1, wherein the stator comprises:
a plurality of bobbins (46) arranged as a ring shape and each bobbin having a coil (45) wound therein, wherein an entire outer portion of the each bobbin is molded; and
a plurality of conductors (47) connected to the plurality of bobbins, respectively, and exposed to the outside of the molding portion at a certain interval along an inner circumference of the stator.

3. The pump of claim 2, wherein the housing comprises:
a cylindrical impeller cover (11) having the inlet at a central upper portion thereof and in which the impeller is arranged; and
a motor cover (12) to which the impeller cover is coupled, at which a plurality of outlets (14, 15) are formed along an outer circumference thereof, and which the stator is fixed to an inner circumference thereof.

4. The pump of claim 3, wherein said guide member is installed between the impeller cover and the motor cover and is adapted to guide said fluid sucked by the impeller toward said motor cover.

5. The pump according to any proceeding claims, wherein the guide member has a flat-type ring shape forming a curved surface toward the impeller.

6. The pump of claim 4, wherein the plurality of outlets are respectively formed at upper and lower sides of the stator.

7. The pump of claim 3, wherein a cooling passage (51) through which fluid sucked by the impeller passes is formed between an outer circumference of the stator and an inner circumference of the motor cover.

8. The pump of claim 4, wherein the molding portion comprises a protruded portion (48) protruding on an outer circumference of the molding portion to be fixed to an inner circumference of the motor cover, and a recessed portion (49) recessed in the outer circumference of the molding portion to form the cooling passage with the inner circumference of the motor cover.

9. The pump of claim 1, wherein the motor is installed on a passage of the fluid flowed from the inlet to the outlet.

## Patentansprüche

1. Nass- und Trockenpumpe, umfassend:
ein Gehäuse (10) mit einem Fluideinlass (13) und einem Fluidauslass (14, 15);
ein im Gehäuse drehbar angeordnetes Pumpenrad (20); und
einen Motor (40) mit einer mit dem Pumpenrad verbundenen rotierenden Welle (30), einem an der Innenumfangsfläche des Gehäuses befestigten Stator (41) mit einer feuchtigkeitsdicht bearbeiteten gewickelten Spule (45) darin und einem Rotor (42), der am Außenumfang der rotierenden Welle unter Einhaltung eines bestimmten Spalts (50) zum Innenumfang des Stators befestigt ist, **dadurch gekennzeichnet, dass** sie ferner ein im Gehäuse (10) installiertes Führungselement (22) aufweist, das zum Leiten des vom Pumpenrad angesaugten Fluids zum Motor eingerichtet ist, wobei die Auslässe oberhalb und unterhalb des Stators gebildet sind.

2. Pumpe nach Anspruch 1, wobei der Stator aufweist:
eine Mehrzahl ringförmig angeordneter Spulenkörper (46), wobei jeder Spulenkörper eine darin gewickelte Spule (45) besitzt, wobei der gesamte äußere Bereich jedes Spulenkörpers als Formteil ausgebildet ist; und
eine Mehrzahl Leiter (47), die mit der Mehrzahl Spulenkörper verbunden ist und zur Außenseite des Formbereichs in einem bestimmten Abstand entlang des Innenumfangs des Stators freiliegt.

3. Pumpe nach Anspruch 2, wobei das Gehäuse aufweist:
eine zylindrische Pumpenradabdeckung (11), wobei der Einlass in einem zentralen oberen Abschnitt derselben liegt und das Pumpenrad in der Pumpenradabdeckung angeordnet ist; und
eine Motorabdeckung (12), mit der die Pumpenradabdeckung gekoppelt ist, wobei längs des Außenumfangs der Motorabdeckung eine Mehrzahl Auslässe (14, 15) gebildet ist und an ihrem Innenumfang der Stator befestigt ist.

4. Pumpe nach Anspruch 3, wobei das Führungselement zwischen der Pumpenradabdeckung und der Motorabdeckung installiert ist und dazu ausgebildet ist, das vom Pumpenrad angesaugte Fluid zum Motor zu leiten.

5. Pumpe nach einem der vorigen Ansprüche, wobei das Führungselement die Form einer Ringscheibe mit einer gekrümmten Oberfläche zum Pumpenrad hin besitzt.

6. Pumpe nach Anspruch 4, wobei die Mehrzahl Auslässe oberhalb und unterhalb des Stators gebildet ist.

7. Pumpe nach Anspruch 3, wobei ein Kühlkanal (51), durch den das vom Pumpenrad angesaugte Fluid strömt, zwischen dem Außenumfang des Stators und dem Innenumfang der Motorabdeckung gebildet ist.

8. Pumpe nach Anspruch 4, wobei der Formbereich einen am Außenumfang des Formbereichs abstehenden Vorsprungsabschnitt (48) zur Befestigung am Innenumfang der Motorabdeckung sowie einen Vertiefungsabschnitt (49) aufweist, der im Außenumfang des Formabschnitts gebildet ist, um zusammen mit dem Innenumfang der Motorabdeckung den Kühlkanal zu bilden.

9. Pumpe nach Anspruch 1, wobei der Motor an einem Fluidkanal installiert ist, durch den das Fluid vom Einlass zum Auslass strömt.

## Revendications

1. Pompe humide et sèche, comprenant :
un carter (10) ayant une entrée (13) et une sortie (14, 15) de fluide ;
une turbine (20) placée de manière à pouvoir tourner dans le carter ; et
un moteur (40) comprenant un arbre rotatif (30) connecté à la turbine, un stator (41) fixé sur une surface circonférentielle intérieure du carter et ayant un bobinage traité pour être étanche à l'humidité (45) à l'intérieur de celui-ci, et un rotor (42) fixé sur une circonférence extérieure de l'arbre rotatif en maintenant un certain espacement (50) avec une circonférence intérieure du stator, **caractérisée en ce qu'**elle comprend en outre un membre de guidage (22) installé dans le carter (10) apte à guider le fluide aspiré par ladite turbine vers ledit moteur, dans laquelle les sorties sont respectivement formées sur un côté supérieur et un côté inférieur du stator.

2. Pompe selon la revendication 1, dans laquelle le stator comprend :
une pluralité de bobines (46) agencées en forme d'anneau et chaque bobine ayant un bobinage (45) enroulé à l'intérieur de celle-ci, dans laquelle toute une portion extérieure de chaque bobine est moulée ; et
une pluralité de conducteurs (47) connectés à la pluralité de bobines, respectivement, et exposés à l'extérieur de la portion de moulage à un certain intervalle le long d'une circonférence intérieure du stator.

3. Pompe selon la revendication 2, dans laquelle le carter comprend :
un couvercle de turbine cylindrique (11) ayant l'entrée à une portion supérieure centrale de celui-ci et dans lequel la turbine est agencée ; et
un couvercle de moteur (12) auquel le couvercle de turbine est couplé, une pluralité de sorties (14, 15) étant formées le long d'une circonférence extérieure de celui-ci et le stator étant fixé sur une circonférence intérieure de celui-ci.

4. Pompe selon la revendication 3, dans laquelle ledit membre de guidage est installé entre le couvercle de turbine et le couvercle de moteur et est apte à guider ledit fluide aspiré par la turbine vers ledit couvercle de moteur.

5. Pompe selon l'une quelconque des revendications précédentes, dans laquelle le membre de guidage a une forme d'anneau plat constituant une surface incurvée vers la turbine.

6. Pompe selon la revendication 4, dans laquelle la pluralité de sorties sont respectivement formées sur le côté supérieur et le côté inférieur du stator.

7. Pompe selon la revendication 3, dans laquelle un passage de refroidissement (51) à travers lequel passe le fluide aspiré par la turbine est formé entre une circonférence extérieure du stator et une circonférence intérieure du couvercle de moteur.

8. Pompe selon la revendication 4, dans laquelle la portion de moulage comprend une portion protubérante (48) faisant saillie sur une circonférence extérieure de la portion de moulage à fixer sur une circonférence intérieure du couvercle de moteur, et une portion renfoncée (49) renfoncée dans la circonférence extérieure de la portion de moulage pour former le passage de refroidissement avec la circonférence intérieure du couvercle de moteur.

9. Pompe selon la revendication 1, dans laquelle le moteur est installé sur un passage du fluide s'écoulant de l'entrée vers la sortie.
